# EUROPEAN PATENT APPLICATION

(11) **EP 4 554 061 A1**
(43) Date of publication of application: **14.05.2025**
(21) Application number: 23871607.0
(22) Date of filing: 24.08.2023
(51) Int. Cl.: H02K 5/16, H02K 16/02

(54) **MAGNETIC-GEARED ELECTRIC MACHINE**

(30) Priority: 26.09.2022 JP 2022152105
(71) Applicant: Mitsubishi Heavy Industries, Ltd., Tokyo 100-8332 (JP)
(72) Inventor: SAKAI, Masayuki, Tokyo 100-8332 (JP); AOKI, Yasutaka, Tokyo 100-8332 (JP); KURODA, Naoki, Tokyo 100-8332 (JP); MIWA, Junichi, Tokyo 100-8332 (JP); SASAKI, Mikito, Tokyo 100-8332 (JP); UMEDA, Akihiko, Tokyo 100-8332 (JP)
(74) Representative: Studio Torta S.p.A.
(86) International application number: PCT/JP2023/030562
(87) International publication number: WO 2024/070366

(57) **Abstract**

A magnetic geared electrical machine includes: a stator; a pole piece rotor including a pole piece disposed radially inward of the stator and a pole piece connection part connected to an end portion of the pole piece on one side in an axial direction; a magnet rotor disposed radially inward of the pole piece; a housing which accommodates the stator, the pole piece rotor, and the magnet rotor; a first bearing connected to the housing and the pole piece connection part; and a fan for sending cooling air to the first bearing. The fan is configured such that the cooling air flows from the other side to the one side in the axial direction in each of an outer air gap formed between the stator and the pole piece and an inner air gap formed between the pole piece and the magnet rotor. At least a part of the first bearing is located radially outward of an inner peripheral surface of the pole piece and radially inward of the stator.

## Description

### TECHNICAL FIELD

The present disclosure relates to a magnetic geared electrical machine.

The present application claims priority based on Japanese Patent Application No. 2022-152105 filed on September 26, 2022, the entire content of which is incorporated herein by reference.

### BACKGROUND ART

Patent Document 1 discloses a rotating electric machine as an induction electric motor that cools an internal space. This rotating electric machine includes: a stator; a rotor located on an inner diameter side of the stator; and an inner fan and an outer fan respectively disposed at both ends of the rotor in the axial direction. When the rotor outputs power, internal air circulates by rotation of the inner fan, and cooling air flows along the housing outer surface by rotation of the outer fan.

### Citation List

### Patent Literature

Patent Document 1: WO2019234967A

### SUMMARY

### Problems to be Solved

When a magnetic geared rotating machine operates in which a plurality of parts for transmitting power are not in contact with each other, the temperature of the internal space of a housing that constitutes the magnetic geared electrical machine may rise due to, for example, copper loss or iron loss. In particular, bearings accommodated inside the housing tend to have lower heat resistance temperatures than other components that make up the magnetic geared electrical machine, and a cooling design for bearings is desirable.

An object of the present disclosure is to provide a magnetic geared electrical machine with improved cooling effect for bearings accommodated inside the housing.

### Solution to the Problems

A magnetic geared electrical machine according to at least one embodiment of the present disclosure includes: a stator; a pole piece rotor including a pole piece disposed radially inward of the stator and a pole piece connection part connected to an end portion of the pole piece on one side in an axial direction; a magnet rotor disposed radially inward of the pole piece; a housing which accommodates the stator, the pole piece rotor, and the magnet rotor; a first bearing connected to the housing and the pole piece connection part; and a fan for sending cooling air to the first bearing, the fan being configured such that the cooling air flows from the other side to the one side in the axial direction in each of an outer air gap formed between the stator and the pole piece and an inner air gap formed between the pole piece and the magnet rotor. At least a part of the first bearing is located radially outward of an inner peripheral surface of the pole piece and radially inward of the stator.

### Advantageous Effects

The present disclosure provides a magnetic geared electrical machine with improved cooling effect for bearings accommodated inside the housing.

### BRIEF DESCRIPTION OF DRAWINGS

FIG. 1A is a schematic view of a magnetic geared electrical machine (magnetic geared generator) according to an embodiment.
FIG. 1B is a schematic view of a magnetic geared electrical machine (magnetic geared motor) according to another embodiment.
FIG. 2 is a schematic view showing an internal structure of a magnetic geared electrical machine according to an embodiment.
FIG. 3 is a schematic view showing the inside of a housing of a magnetic geared electrical machine according to an embodiment.
FIG. 4 is a partial enlarged view of FIG. 3.
FIG. 5 is a schematic view of a pole piece connection part according to another embodiment.
FIG. 6A is a schematic view showing details of a peripheral wall of a rotational shaft according to an embodiment.
FIG. 6B is a schematic view showing details of a peripheral wall of a rotational shaft according to another embodiment.
FIG. 7 is a schematic view showing a second bearing arrangement structure according to an embodiment.
FIG. 8 is another schematic view showing the second bearing arrangement structure according to an embodiment.

### DETAILED DESCRIPTION

Embodiments of the present disclosure will be described below with reference to the accompanying drawings. It is intended, however, that unless particularly identified, dimensions, materials, shapes, relative positions, and the like of components described in the embodiments shall be interpreted as illustrative only and not intended to limit the scope of the present disclosure.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

The same features can be indicated by the same reference numerals and not described in detail.

### <1. Overview of magnetic geared electrical machine 1>

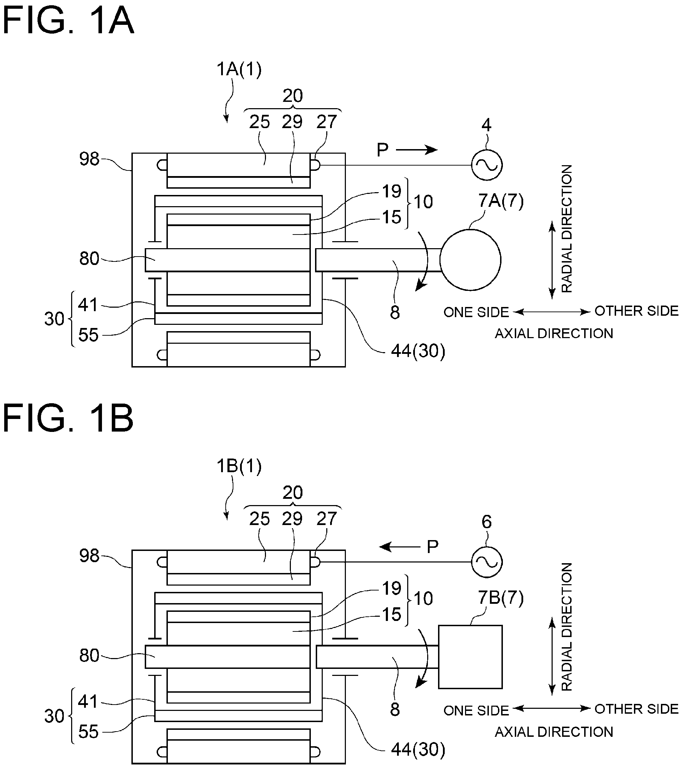

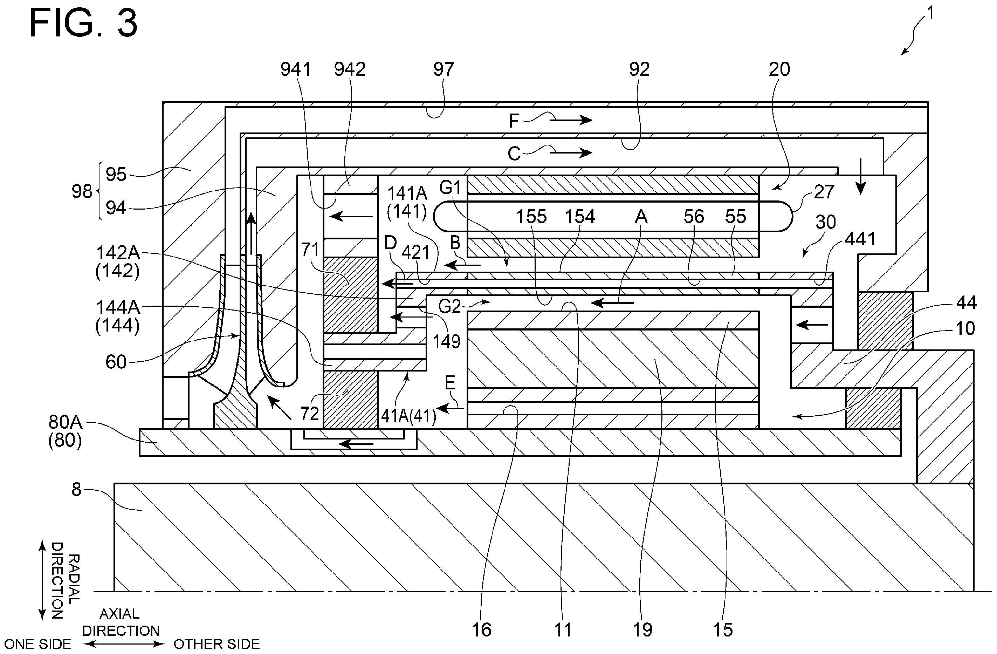

FIGs. 1A and 1B are each a schematic view of a magnetic geared electrical machine 1A, 1B (1) according to some embodiments of the present disclosure. In the following description, "axial direction" or "axially" refers to the direction parallel to the axis of the magnetic geared electrical machine 1, "radial direction" or "radially" refers to the radial direction with respect to the axis of the magnetic geared electrical machine 1, and "circumferential direction" or "circumferentially" refers to the circumferential direction with respect to the axis of the magnetic geared electrical machine 1. The magnetic geared electrical machine 1 includes a rotational shaft 80. The axis of the rotational shaft 80 coincides with the axis of the magnetic geared electrical machine 1. The magnetic geared electrical machine 1 is connected to a power transmission shaft 8 of an external rotating device 7. The rotational shaft 80 may be solid, as illustrated in FIGs. 1A and 1B, or may be cylindrical to accommodate the power transmission shaft 8 (see FIG. 3).

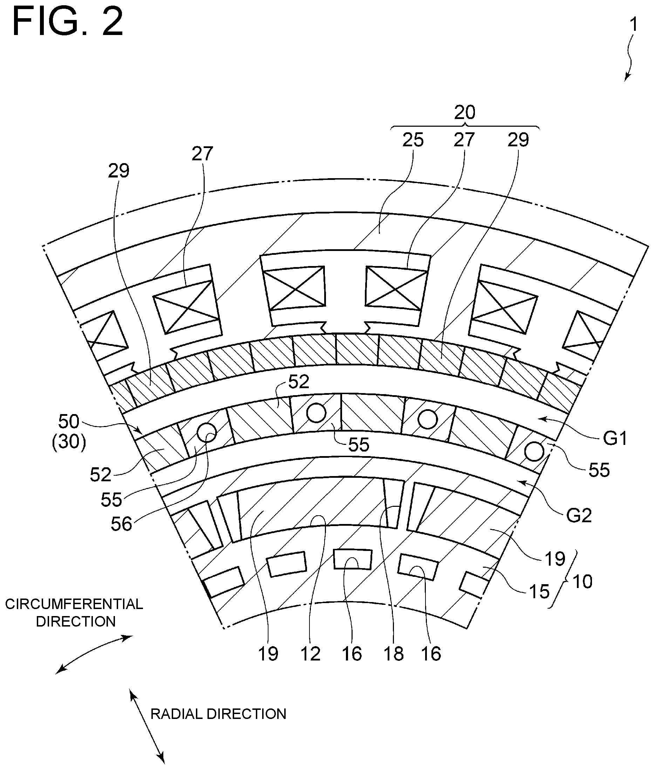

The magnetic geared electrical machine 1 illustrated in FIGs. 1A and 1B includes a magnet rotor 10 and a stator 20. The magnet rotor 10 and the stator 20 are accommodated in a housing 98. The magnet rotor 10 includes a plurality of rotor magnets 19 arranged in the circumferential direction and a rotor yoke 15 supporting the plurality of rotor magnets 19. The rotor yoke 15 is supported by the rotational shaft 80, and the magnet rotor 10 is configured to rotate integrally with the rotational shaft 80. In these figures, the surface permanent magnet (SPM) configuration is used, in which the rotor magnets 19 are provided on the surface of the rotor yoke 15, but this disclosure is not limited thereto. For example, the interior permanent magnet (IPM) configuration may be used, in which the rotor magnets 19 are provided inside the rotor yoke 15 (see FIG. 2). The stator 20, which is fixed to the housing 98, includes a plurality of stator magnets 29 arranged in the circumferential direction, a stator yoke 25 supporting the plurality of stator magnets 29, and a coil 27 as a stator coil wound around the stator yoke 25. In the stator 20 shown in the figures, the SPM configuration is used, in which the stator magnets 29 are provided on the surface of the stator yoke 25, but this disclosure is not limited thereto, and the IPM configuration may be used.

The magnetic geared electrical machine 1 of FIGs. 1A and 1B further includes a pole piece rotor 30 accommodated in the housing 98. The pole piece rotor 30 includes a plurality of pole pieces 55 arranged in the circumferential direction, a pole piece connection part 41 disposed on axially one side of the plurality of pole pieces 55, and another pole piece connection part 44 disposed on the opposite side of the plurality of pole pieces 55 from the pole piece connection part 41. The plurality of pole pieces 55 is disposed radially inward of the stator 20 and radially outward of the magnet rotor 10. The pole piece connection part 41 is located on one side in the axial direction relative to the magnet rotor 10 and is connected to the rotational shaft 80 via a bearing (the detailed connection structure of the pole piece connection part 41 will be described below using FIG. 3, etc.). The other pole piece connection part 44 illustrated in these figures is connected to the power transmission shaft 8, so that the pole piece rotor 30 can rotate integrally with the power transmission shaft 8.

The magnetic geared electrical machine 1A (1) illustrated in FIG. 1A is a magnetic geared generator configured to be driven by input from a prime mover 7A, which is an example of the external rotating device 7, to generate electric power. The coil 27 in this embodiment is electrically connected to a power supply destination 4, which may be a power grid. The principle of generating electric power by the magnetic geared electrical machine 1A as a magnetic geared generator is as follows. When the prime mover 7A rotates and drives the power transmission shaft 8, the pole piece rotor 30 rotates. The positional relationship of the plurality of pole pieces 55 relative to the plurality of rotor magnets 19 and the plurality of stator magnets 29 changes, the magnetic flux between the magnet rotor 10 and the stator 20 is modulated, and the magnet rotor 10 rotates in conjunction with the rotational shaft 80 as the rotor magnets 19 receive magnetic force from the modulated magnetic field. The electromagnetic induction caused by the rotation of the pole piece rotor 30 and the magnet rotor 10 generates a current in the coil 27, so that the magnetic geared electrical machine 1A, as a magnetic geared generator, can supply electric power to the power supply destination 4.

The magnetic geared electrical machine 1 (1B) illustrated in FIG. 1B is a magnetic geared motor configured to drive a rotating machine 7B, which is an example of the external rotating device 7, upon receiving electric power P supplied from a power supply source 6, which may be, for example, a power grid. The rotating machine 7B may be, for example, an electrical vehicle, in which case the power transmission shaft 8 of the rotating machine 7B is the drive shaft of the electrical vehicle. The principle of driving the rotating machine 7B by the magnetic geared electrical machine 1B as a magnetic geared motor is as follows. The magnet rotor 10 rotates with the rotational shaft 80 by a rotating magnetic field generated by energization of the coil 27. The positional relationship of the plurality of pole pieces 55 relative to the plurality of rotor magnets 19 and the plurality of stator magnets 29 changes, the magnetic flux between the magnet rotor 10 and the stator 20 is modulated, the pole piece rotor 30 rotates, and torque is output to the power transmission shaft 8. As a result, the magnetic geared electrical machine 1B as a magnetic geared motor drives the rotating machine 7B.

In the magnetic geared electrical machine 1A, 1B (1) of FIGs. 1A and 1B, NL = NH + NS holds, where NL is the number of magnetic poles of the pole pieces 55 of the pole piece rotor 30, NH is the number of pairs of magnetic poles (pole pairs) of the rotor magnets 19 of the magnet rotor 10, and NS is the number of pairs of magnetic poles (pole pairs) of the stator magnets 29 of the stator 20. If this relationship holds, the ratio of the number of rotations of the magnet rotor 10 to the pole piece rotor 30 is expressed as NL/NH. In this example, NL/NH is greater than 1, meaning that the magnet rotor 10 functions as a high-speed rotor and the pole piece rotor 30 functions as a low-speed rotor. The number of magnetic poles NL of the pole pieces 55 is smaller than the number of pole pairs NS of the stator magnets 29.

### <2. Overview of internal structure of magnetic geared electrical machine 1>

FIG. 2 is a schematic view showing an internal structure of the magnetic geared electrical machine 1 according to an embodiment of the present disclosure. The pole piece rotor 30 has an annular unit 50 including a plurality of pole pieces 55 and a plurality of non-magnetic bodies 52. Each pole piece 55 and each non-magnetic body 52 extend in the axial direction. The plurality of pole pieces 55 and the plurality of non-magnetic bodies 52 are arranged alternately with each other in the circumferential direction. In this example, each pole piece 55 is formed from a plurality of axially stacked electromagnetic steel plates. In other examples, each pole piece 55 may be formed from a plurality of powder magnetic cores, or from a combination of a plurality of electromagnetic steel plates and a plurality of powder magnetic cores.

The pole piece connection part 41 (see FIGs. 1A and 1B) is connected to an end portion of the annular unit 50 on one side in the axial direction; more precisely, the pole piece connection part 41 is connected to one axial end of each pole piece 55 and one axial end of each non-magnetic body 52. Similarly, the other pole piece connection part 44 (see FIGs. 1A and 1B) is connected to an end portion of the annular unit 50 on the other side in the axial direction; more precisely, the other pole piece connection part 44 is connected to the other axial end of each pole piece 55 and the other axial end of each non-magnetic body 52. The pole piece 55 is not limited to being directly connected to the pole piece connection part 41 and the other pole piece connection part 44. For example, a spacer made of non-magnetic material may be interposed between the pole piece 55 and the pole piece connection part 41 and between the pole piece 55 and the other pole piece connection part 44. Similarly, the non-magnetic body 52 may be directly connected to the pole piece connection part 41 and the other pole piece connection part 44, or indirectly via a separate member.

The annular unit 50 is opposed to the stator 20 with an outer air gap G1 therebetween, and the annular unit 50 is opposed to the magnet rotor 10 with an inner air gap G2 therebetween (i.e., the outer air gap G1 is interposed between the pole piece 55 and the stator 20 and the inner air gap G2 is interposed between the pole piece 55 and the magnet rotor 10). Cooling air flows along the axial direction in the outer air gap G1 and the inner air gap G2, as described below.

Although not an essential component of the present disclosure, the outer peripheral surface of the annular unit 50 may be covered partially or completely by a cover (not shown). Similarly, the inner peripheral surface of the annular unit 50 may be covered partially or completely by a cover (not shown). The material forming the cover is preferably a non-magnetic material, more preferably a non-magnetic and non-conductive material.

Although not an essential component of the present disclosure, at least one of the plurality of pole pieces 55 may include a pole piece air passage 56 which opens in the axial direction. Cooling air flows along the axial direction in the pole piece air passage 56, as described below. In this case, the pole piece connection part 41 and the other pole piece connection part 44 should be respectively provided with a connection part air passage 421 and another connection part air passage 441 that communicate with the pole piece air passage 56 (see FIG. 3). Both the connection part air passage 421 and the other connection part air passage 441 are holes opening in the axial direction. In the example of FIG. 2, each of the plurality of pole pieces 55 includes the pole piece air passage 56, and a plurality of the connection part air passage 421 and a plurality of the other connection part air passages 441 are provided for the plurality of pole piece air passages 56 (details of the pole piece air passage 56 are described below).

Although not illustrated in detail, at least one of the plurality of non-magnetic bodies 52 may include a non-magnetic body air passage which opens in the axial direction, and cooling air may flow along the axial direction in this air passage. In this case, each of the pole piece connection part 41 and the other pole piece connection part 44 may be provided with an air passage that communicates with the non-magnetic body air passage in the axial direction.

Although not an essential component of the present disclosure, the rotor yoke 15 may include a rotor air passage 16 which opens in the axial direction. In the example of FIG. 2, a plurality of pole piece air passages 56 are arranged at intervals in the circumferential direction. Furthermore, although not an essential component of the present disclosure, in embodiments where the IPM configuration is applied to the magnet rotor 10, a rotor defining air passage 18 that defines a hole opening in the axial direction may be formed in a magnet receiving hole portion 12 for receiving the rotor magnet 19. Cooling air may flow along the axial direction in the rotor air passage 16 and the rotor defining air passage 18.

### <3. Overview of cooling structure of magnetic geared electrical machine 1>

FIG. 3 is a schematic view showing the inside of the housing 98 of the magnetic geared electrical machine 1 according to an embodiment of the present disclosure. Heat is generated inside the housing 98 for a variety of reasons, including copper loss in the coil 27, iron loss in the stator magnet 29 (not shown in FIG. 3), iron loss in the pole piece 55, and iron loss in the rotor magnet 19. Therefore, the magnetic geared electrical machine 1 of the present disclosure has a fan 60 fixed to the rotational shaft 80 as a component for cooling the inside of the housing 98. The fan 60 illustrated in this figure is located on the opposite side of the magnet rotor 10 from the other pole piece connection part 44, and in a more detailed example, it is located on one side in the axial direction relative to the pole piece connection part 41. The present disclosure is not limited to the fan 60 being fixed to the rotational shaft 80 (details are described below).

The housing 98 of the present disclosure is a sealed housing, and the housing 98 includes an inner housing 94 which accommodates the stator 20, the pole piece rotor 30, and the magnet rotor 10 in a sealed condition. Cooling air is circulated in the inner housing 94. As a specific example, when the fan 60, which is at least partially located in the sealed space of the inner housing 94, rotates with the rotational shaft 80, cooling air flows in each of the outer air gap G1 and the inner air gap G2 from the other side to one side in the axial direction (arrows A, B). The cooling air cools at least one of the stator 20, the pole piece rotor 30, or the magnet rotor 40. The cooling air then flows from one side to the other side in the axial direction through a return passage 92, which is formed radially outward of the stator 20 in the sealed space of the inner housing 94 (arrow C). The return passage 92 is formed over the entire circumferential length of the magnetic geared electrical machine 1.

In some embodiments of the present disclosure, cooling air may flow through a different air passage than the outer air gap G1 and the inner air gap G2. For example, cooling air may flow from the other side to one side in the axial direction through the other connection part air passage 441, the pole piece air passage 56, and the connection part air passage 421 (arrow D). Alternatively, cooling air may flow to one side in the axial direction through at least one of the rotor air passage 16 or the rotor defining air passage 18 (not shown in FIG. 3) (arrow E). The cooling air that has flowed through these air passages is also circulated through the return passage 92. In addition, the inner housing 94 may include a housing air passage 941 which opens in the axial direction on one side in the axial direction relative to the stator 20. The housing air passage 941 in this example is formed in a housing extension part 942 that extends in the radial direction on one side in the axial direction relative to the stator 20 (the housing extension part 942 is a component of the inner housing 94). The housing air passage 941 facilitates the circulation of cooling air in the inner housing 94.

The housing 98 may further include an outer housing 95 which accommodates the inner housing 94, although it is not an essential component of the present disclosure. The outer housing 95 is an open housing 98, and the internal space of the outer housing 95 communicates with the exterior space of the magnetic geared electrical machine 1. In this example, a part of the fan 60 is located in the internal space of the outer housing 95. When the fan 60 rotates, cooling air as external air flows along the axial direction through an outer air passage 97 of the outer housing 95, which is adjacent to the return passage 92 in the radial direction (arrow F). The temperature of cooling air circulating in the inner housing 94 is lowered by heat exchange between cooling air (circulating air) flowing through the return passage 92 and cooling air (external air) flowing through the outer air passage 97. In other embodiments, the outer air passage 97 of the outer housing 95 may be adjacent to the return passage 92 in the circumferential direction instead of being adjacent to the return passage 92 in the radial direction. The housing 98 may not include the outer housing 95. Further, the inner housing 94 may be an open housing with a communication port, such as a duct, communicating with the external space. In this case, the fan 60 does not have to be fixed to the rotational shaft 80; for example, the fan 60 may be mounted on the outside of the inner housing 94. The rotation of the fan 60 causes cooling air to flow into the inner housing 94 through the communication port.

### <4. Detail of cooling object in housing 98>

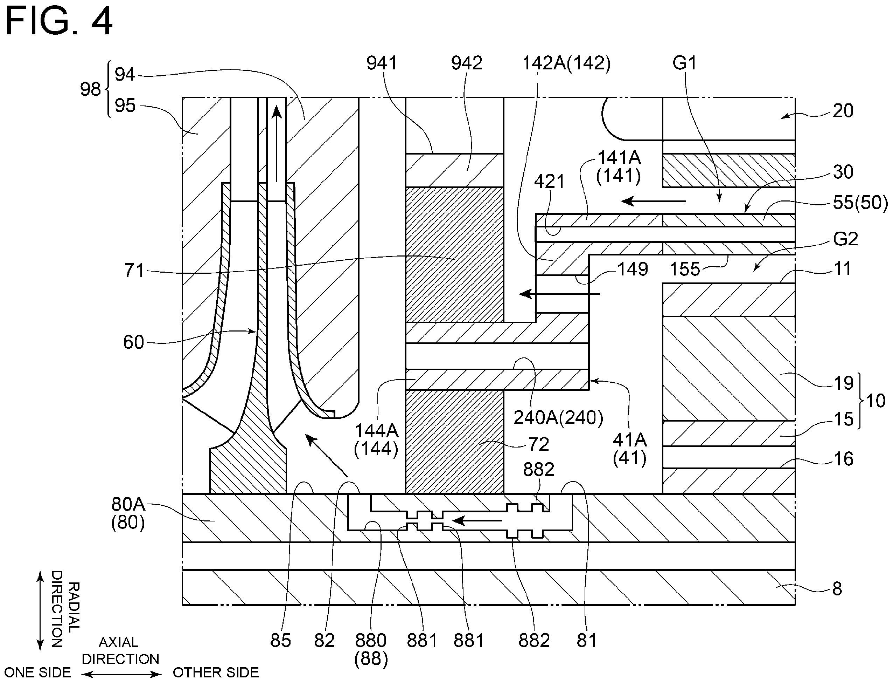

Details of the cooling object in the housing 98 will be illustrated with reference to FIG. 4. FIG. 4 is a partial enlarged view of FIG. 3. The pole piece connection part 41A (41) illustrated in this figure includes a ring part 141A (141) connected to an end portion of the annular unit 50 (see FIG. 2) on one side in the axial direction, a radial extension part 142A (142) extending radially inward from the ring part 141A, and an axial extension part 144A (144) extending from the radial extension part 142A to one side in the axial direction. The ring part 141A (141) is ring-shaped and is axially opposed to the annular unit 50 over the entire circumferential length of the annular unit 50. The above-described connection part air passage 421A (421) is formed in the ring part 141A (141). The axial extension part 144A is disposed radially inward of the housing extension part 942.

The magnetic geared electrical machine 1 further includes a first bearing 71 as the cooling object. The first bearing 71 is connected to the housing 98 and the pole piece connection part 41, and in a more detailed example, it is connected to the housing extension part 942 and the axial extension part 144A (144). The first bearing 71 is arranged to be hit by cooling air that may flow through the outer air gap G1 or the inner air gap G2, for example. Therefore, it is understood that the previously mentioned fan 60 is configured to send cooling air to the first bearing 71. The cooling air may cool the first bearing 71 by hitting the housing extension part 942. This is because the first bearing 71 is cooled through the cooling of the housing extension part 942.

However, when a configuration is adopted where cooling air flows in the inner air gap G2 or the outer air gap G1 from the other side to one side in the axial direction, the cooling air receives heat from at least one of the pole piece rotor 30, the stator 20, or the magnet rotor 10 before it reaches the first bearing 71. Therefore, the temperature of cooling air reaching the first bearing 71 is relatively high, and there is a risk that it may not sufficiently cool the first bearing 71, which has a relatively low heat resistance temperature. To solve this issue, in the present disclosure, at least a part of the first bearing 71 is located radially outward of the inner peripheral surface 155 of the pole piece 55 and radially inward of the stator 20. With the above configuration, cooling air flowing through the outer air gap G1 easily hits the first bearing 71 or the housing extension part 942, which facilitates cooling of the first bearing 71. Thus, it is possible to achieve the magnetic geared electrical machine 1 that can suppress the temperature rise of the first bearing 71, which is an example of bearings accommodated inside the housing 98.

The above arrangement structure in which at least a part of the first bearing 71 is located radially outward of the inner peripheral surface 155 of the pole piece 55 and radially inward of the stator 20 is referred to as the "first bearing arrangement structure". The following description of the inside of the housing 98 using FIGs. 3 to 6B is based on the first bearing arrangement structure (however, at least one of the configurations illustrated in FIGs. 3 to 6B may be applied to the "second bearing arrangement structure", which will be described below).

In the example of FIG. 3, the whole of the first bearing 71 is located radially inward of the stator 20. With the above configuration, the first bearing 71 can be separated in the radial direction from the stator 20, whose temperature tends to rise significantly due to heat generated by, for example, energizing the coil 27, so that the cooling effect on the first bearing 71 can be improved. Furthermore, since the whole of the first bearing 71 is located radially inward of the stator 20, the stator 20 does not interfere with work in at least one of the assembly or disassembly processes of the magnetic geared electrical machine 1. Therefore, at least one of the assembly or disassembly processes of the magnetic geared electrical machine 1 can be simplified.

A part of the first bearing 71 may be located radially outward of the stator 20. Even in this case, a part of the first bearing 71 is axially aligned with the outer air gap G1, and cooling air flowing through the outer air gap G1 easily hits the first bearing 71, so the cooling effect on the first bearing 71 can be expected.

In the example of FIG. 3, at least a part of the first bearing 71 (in the depicted example, a part of the first bearing 71) is located radially outward of the outer peripheral surface 154 of the pole piece 55. With the above configuration, since at least a part of the first bearing 71 is axially aligned with the outer air gap G1, cooling air flowing through the outer air gap G1 easily hits the first bearing 71, and the magnetic geared electrical machine 1 can improve the cooling effect on the first bearing 71.

In the example of FIG. 3, a part of the first bearing 71 is located radially outward of the inner peripheral surface 155 of the pole piece 55 and radially inward of the stator 20. Further, another part of the first bearing 71 is located radially inward of the outer peripheral surface 11 of the magnet rotor 10. The outer peripheral surface 11 of the pole piece rotor 30 illustrated in FIG. 3 is the outer peripheral surface of the rotor yoke 15, but the present disclosure is not limited thereto. The outer peripheral surface 11 may be the outer peripheral surface of the rotor magnet 19. With the above configuration, since a part of the first bearing 71 is axially aligned with the inner air gap G2, the first bearing 71 is easily cooled by cooling air flowing through the inner air gap G2. Therefore, the magnetic geared electrical machine 1 can improve the cooling effect on the first bearing 71.

The radial extension part 142A (142) of the pole piece connection part 41A (41) is preferably provided with a connection part axial passage 149, which is a hole opening in the axial direction. As a result, cooling air flowing through the inner air gap G2 can easily reach the first bearing 71 through the connection part axial passage 149, so that the cooling air can easily hit the first bearing 71. A plurality of connection part axial passages 149 may be arranged at intervals in the circumferential direction. This allows the cooling air to easily reach the first bearing 71. Alternatively, at least a part of the connection part axial passage 149 is preferably located radially outward of the outer peripheral surface 11 of the magnet rotor 10 and radially inward of the inner peripheral surface 155 of the pole piece 55. As a result, since the connection part axial passage 149 and the inner air gap G2 are axially aligned, cooling air flowing through the inner air gap G2 can easily reach the first bearing 71 through the connection part axial passage 149.

However, the present disclosure is not limited to the radial extension part 142A (142) provided with the connection part axial passage 149. For example, the radial extension part 142A may be columnar and a plurality of the radial extension parts 142A may be arranged at intervals in the circumferential direction. In this case, even if the radial extension parts 142A are solid, the cooling air can pass through the gap formed between two circumferentially adjacent radial extension parts 142A, and the cooling air can easily reach the first bearing 71.

The axial extension part 144A (144) illustrated in FIG. 4 has an axial passage 240A (240), which is a hole opening in the axial direction. The axial passage 240A illustrated in this figure is located radially inward of the connection part axial passage 149. Cooling air can flow into the axial passage 240A, and the cooling air discharged from axial passage 240A flows into the return passage 92 (see FIG. 3). With the above configuration, cooling air flowing through the axial passage 240 can cool the first bearing 71 through cooling of the axial extension part 144. Therefore, the cooling effect on the first bearing 71 can be improved.

In the example of FIG. 4, the machine further includes a second bearing 72 connected to the rotational shaft 80 and the axial extension part 144A (144). The second bearing 72 is located on one side in the axial direction relative to the pole piece rotor 30 and is in the same axial position as the first bearing 71. The second bearing 72 is a different bearing from the first bearing 71. When a configuration is adopted where cooling air flows in the inner air gap G2 or the outer air gap G1 from the other side to one side in the axial direction, the cooling air that receives heat from at least one of the pole piece rotor 30, the stator 20, or the magnet rotor 10 cools the second bearing 72. Therefore, there is a risk that the cooling air may not sufficiently cool the second bearing 72, which has a relatively low heat resistance temperature. In this regard, with the above configuration, cooling air flowing through the axial passage 240A (240) of the axial extension part 144A (144) can cool not only the first bearing 71 but also the second bearing 72. Thus, it is possible to achieve the magnetic geared electrical machine 1 that can suppress the temperature rise of the second bearing 72, which is an example of bearings accommodated inside the housing 98.

The axial extension part 144A (144) according to an embodiment of the present disclosure is made of an anisotropic thermal conductive material whose thermal conductivity in the axial direction is higher than that in the radial direction. In the axial extension part 144A in this example, the thermal conductivity in the axial direction is more than 100 times greater than the thermal conductivity in the radial direction. The anisotropic thermal conductive material may be, for example, graphene. The above configuration accelerates the release of heat accumulated in the axial extension part 144A in the axial direction, thus improving the cooling effect on the axial extension part 144A and improving the cooling effect on the first bearing 71 connected to the axial extension part 144A. In the embodiment where the axial extension part 144A (144) is also connected to the second bearing 72, the effect of cooling not only the first bearing 71 but also the second bearing 72 can be expected.

Similarly, the rotational shaft 80 connected to the second bearing 72 is made of an anisotropic thermal conductive material whose thermal conductivity in the axial direction is higher than that in the radial direction. The anisotropic thermal conductive material used for the rotational shaft 80 may be the same as the anisotropic thermal conductive material used for the axial extension part 144. The above configuration accelerates the release of heat accumulated in the rotational shaft 80 in the axial direction, thus improving the cooling effect on the rotational shaft 80 and improving the cooling effect on the second bearing 72 connected to the rotational shaft 80.

### <5. Pole piece connection part 41B (41) according to another embodiment>

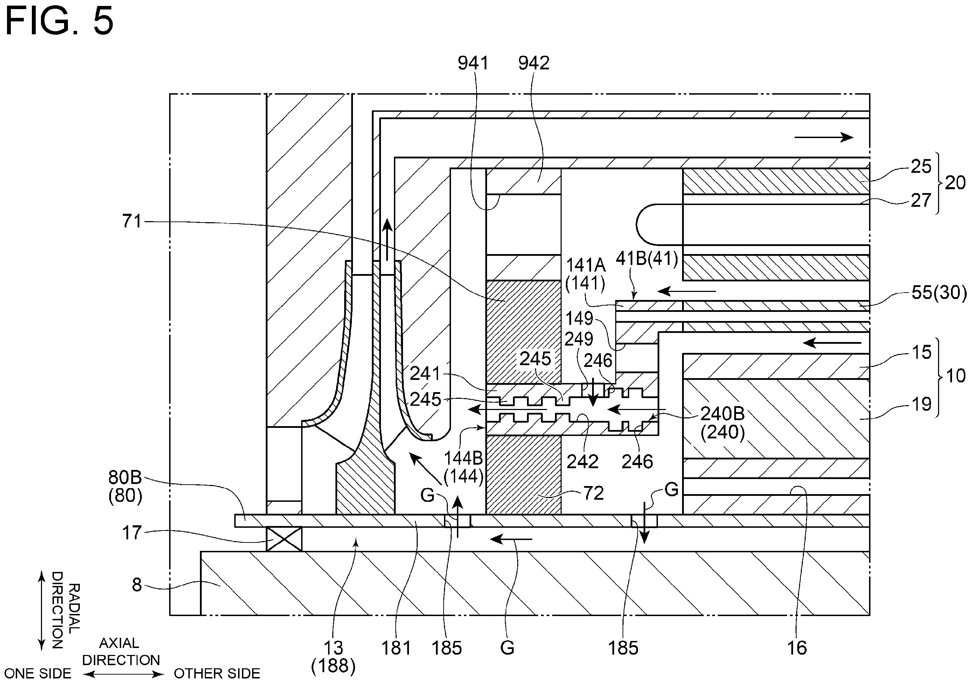

FIG. 5 is a schematic view of a pole piece connection part 41B (41) according to another embodiment. The pole piece connection part 41B differs from the pole piece connection part 41A in that it includes an axial extension part 144B instead of the axial extension part 144A. The axial extension part 144B (144) has a cylindrical side wall 241 surrounding an axial passage 240B (240). The axial passage 240B has a passage inner wall surface 242, which is the inner peripheral surface of the side wall 241, and the passage inner wall surface 242 has at least one of a protrusion 245 or a recess 246. The protrusion 245 and the recess 246 extend in the circumferential direction of the side wall 241. In the example in this figure, a plurality of protrusions 245 arranged in the axial direction and a plurality of recesses 246 arranged in the axial direction are formed, but the present disclosure is not limited thereto. For example, the plurality of protrusions 245 may not be formed on the passage inner wall surface 242, or the plurality of recesses 246 may not be formed on the passage inner wall surface 242. Further, the number of protrusions 245 and the number of recesses 246 may be two or more, or one. The present disclosure is not limited to the protrusion 245 and the recess 246 extending in the circumferential direction of the side wall 241. For example, the protrusion 245 and the recess 246 may extend in the axial direction.

With the above configuration, since at least one of the protrusion 245 or the recess 246 is formed on the passage inner wall surface 242, the surface area of the passage inner wall surface 242 exposed to cooling air flowing through the axial passage 240B is increased. Therefore, the cooling effect on the first bearing 71 can be improved. In the embodiment where the axial extension part 144B is connected to the second bearing 72, the cooling effect on the second bearing 72 can also be improved.

In the example of FIG. 5, the axial extension part 144B (144) has a radial passage 249, which is a hole penetrating the side wall 241 in the radial direction. The radial passage 249 is located on the side opposite the one side (i.e., the other side) in the axial direction relative to the first bearing 71 and communicates with the axial passage 240B (240). The radial passage 249 illustrated in this figure is located on one side in the axial direction relative to the connection part axial passage 149. With the above configuration, cooling air can flow into the axial passage 240B via the radial passage 249. This facilitates the introduction of cooling air into the axial passage 240B, thus improving the cooling effect on the first bearing 71. In the embodiment where the axial extension part 144B is connected to the second bearing 72, the cooling effect on the second bearing 72 can also be improved.

### <6. Rotational shaft 80 according to one embodiment>

Referring to FIG. 4 again, the configuration of the rotational shaft 80 according to an embodiment of the present disclosure will be described. The rotational shaft 80A illustrated in FIG. 4 has a shaft outer peripheral surface 85 and a shaft internal passage 88. The shaft internal passage 88 has a first opening 81 formed in the shaft outer peripheral surface 85 between the second bearing 72 and the magnet rotor 10, and a second opening 82 formed in the shaft outer peripheral surface 85 on the side opposite the first opening 81 with the second bearing 72 therebetween. The shaft internal passage 88 connects the first opening 81 and the second opening 82 on the radially inner side relative to the shaft outer peripheral surface 85 to form a flow path for cooling air. The shaft internal passage 88 may include a plurality of passages arranged at intervals in the circumferential direction.

With the above configuration, cooling air flowing through the shaft internal passage 88 can cool the second bearing 72 via the rotational shaft 80. Therefore, the cooling effect on the second bearing 72 can be further improved.

In the example of FIG. 4, the shaft internal passage 88 has a shaft inner wall surface 880, and the shaft inner wall surface 880 has at least one of a shaft inner wall protrusion 881 or a shaft inner wall recess 882. The shaft inner wall protrusion 881 and the shaft inner wall recess 882 extend in the circumferential direction. In the example shown in this figure, a plurality of shaft inner wall protrusions 881 are arranged at intervals in the axial direction and a plurality of shaft inner wall recesses 882 are arranged at intervals. However, the present disclosure is not limited thereto. For example, the plurality of shaft inner wall protrusions 881 may not be formed on the passage inner wall surface 242, or the plurality of shaft inner wall recesses 882 may not be formed on the passage inner wall surface 242. Further, the number of shaft inner wall protrusions 881 and the number of shaft inner wall recesses 882 may be two or more, or one. The present disclosure is not limited to the shaft inner wall protrusion 881 and the shaft inner wall recess 882 extending in the circumferential direction. For example, the shaft inner wall protrusion 881 and the shaft inner wall recess 882 may extend in the axial direction.

With the above configuration, since at least one of the shaft inner wall protrusion 881 or the shaft inner wall recess 882 is formed on the shaft inner wall surface 880, the surface area of the shaft inner wall surface 880 exposed to cooling air flowing through the shaft internal passage 88 is increased. Therefore, the cooling effect on the second bearing 72 can be improved.

### <7. Rotational shaft 80 according to another embodiment>

A rotational shaft 80B (80) according to another embodiment will be described with reference to FIGs. 5 to 7.

The rotational shaft 80B (80) illustrated in FIG. 5 has a peripheral wall 181 extending in the axial direction. The peripheral wall 181 defines a receiving hole 188 as a space for receiving the power transmission shaft 8 and is configured to face the power transmission shaft 8 in the radial direction with a gap 13 therebetween (the space in the receiving hole 188 in which the power transmission shaft 8 is not located is understood to be the gap 13). In the example shown in this figure, an end portion of the peripheral wall 181 on one side in the axial direction is connected to the power transmission shaft 8 via a seal member 17, which forms the gap 13 between the peripheral wall 181 and the power transmission shaft 8. The seal member 17 is, for example, a labyrinth seal.

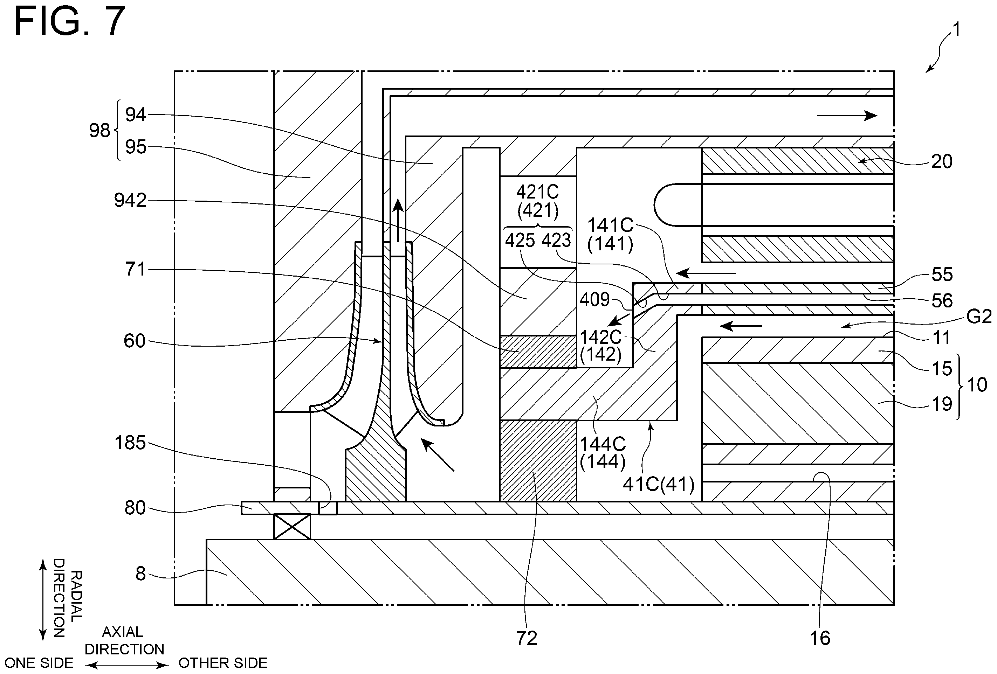

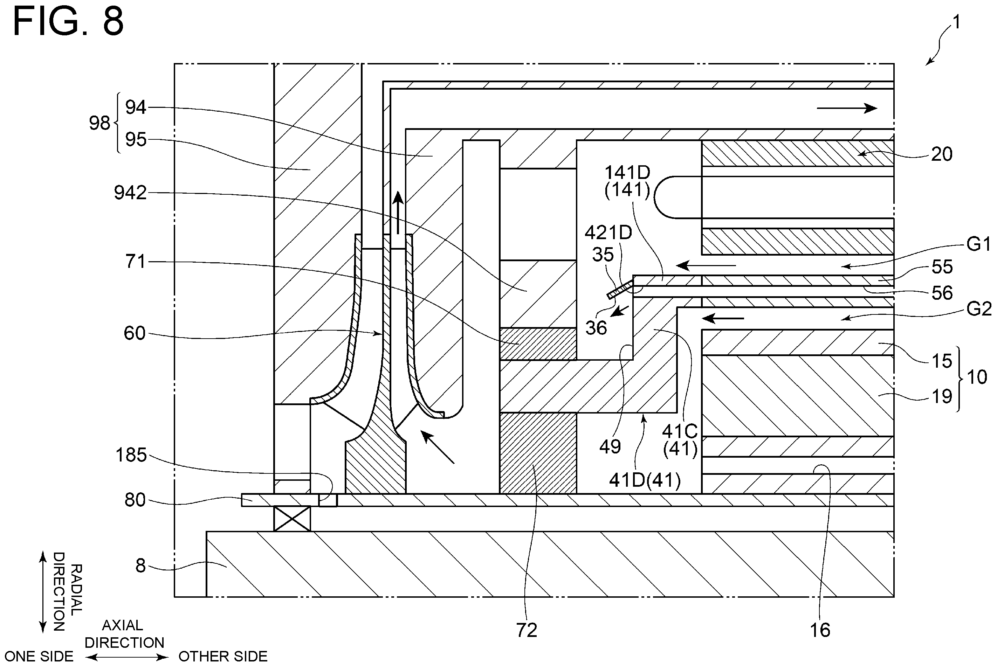

The rotational shaft 80B illustrated in FIG. 5 further has a peripheral wall through-passage 185 penetrating the peripheral wall 181 in the radial direction. The peripheral wall through-passage 185 communicates with the receiving hole 188 (more specifically, the gap 13). Cooling air can enter the gap 13 through the peripheral wall through-passage 185. In the example shown in this figure, two peripheral wall through-passages 185 are formed on one and the other side in the axial direction relative to the second bearing 72, but the present disclosure is not limited thereto. For example, the peripheral wall through-passage 185 may not be formed on the other side in the axial direction relative to the second bearing 72. In this case, a single peripheral wall through-passage 185 may be formed on one side in the axial direction relative to the second bearing 72 (in a more specific example, one side in the axial direction relative to the fan 60) (see FIGs. 7 and 8). The flow direction of cooling air through the peripheral wall through-passage 185 and the gap 13 is not limited to the direction indicated by arrows G in FIG. 5. In other embodiments, cooling air may flow in the direction opposite to that indicated by arrows G.

With the above configuration, cooling air can reach the gap 13 as the internal space of the peripheral wall 181 via the peripheral wall through-passage 185. This improves the cooling effect on the rotational shaft 80B by cooling air, thus enabling cooling of the second bearing 72 through cooling of the rotational shaft 80B. Therefore, the cooling effect on the second bearing 72 can be improved.

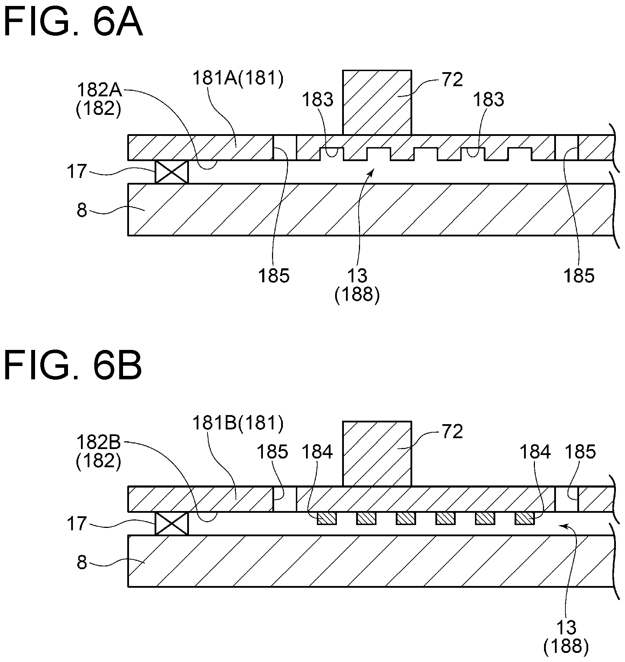

FIGs. 6A and 6B are each a schematic view showing details of the peripheral wall 181A, 181B (181) of the rotational shaft 80B according to some embodiments of the present disclosure. As shown in FIGs. 6A and 6B, the peripheral wall 181A, 181B (181) has a peripheral wall inner peripheral surface 182A, 182B (182) configured to face the power transmission shaft 8 with a gap 13 therebetween. The peripheral wall 181A illustrated in FIG. 6A has a groove 183 formed on the peripheral wall inner peripheral surface 182A. The groove 183 extends along the circumferential direction. The number of grooves 183 may be one or two or more. In the example of FIG. 6A, a plurality of grooves 183 are arranged at intervals in the axial direction. The peripheral wall 181B illustrated in FIG. 6B has a fin 184 formed on the peripheral wall inner peripheral surface 182B. The fin 184 extends along the circumferential direction. The number of fins 184 may be one or two or more. In the example of FIG. 6B, a plurality of fins 184 are arranged at intervals in the axial direction. The fin 184 is formed as a separate part from the peripheral wall inner peripheral surface 182. In other embodiments, at least one groove 183 and at least one fin 184 may both be provided on the peripheral wall inner peripheral surface 182. The present disclosure is not limited to the groove 183 and the fin 184 extending in the circumferential direction. For example, the groove 183 and the fin 184 may extend in the axial direction. The above configuration facilitates cooling of the peripheral wall 181 by cooling air, thus improving the cooling effect on the rotational shaft 80 and improving the cooling effect on the second bearing 72.

### <8. Second bearing arrangement structure>

FIGs. 7 and 8 are each a schematic view showing a second bearing arrangement structure according to some embodiments of the present disclosure. In the second bearing arrangement structure, the first bearing 71 is located radially inward of the pole piece 55, and as a more detailed example, at least a part of the first bearing 71 is located radially inward of the outer peripheral surface 11 of the magnet rotor 10. The pole piece 55 illustrated in the figures has the pole piece air passage 56. In the following, the explanation of features of the second bearing arrangement structure that overlap with the first bearing arrangement structure may be partially or entirely omitted.

Similar to the first bearing arrangement structure, the temperature rise of the first bearing 71 is a concern in the second bearing arrangement structure. That is, the first bearing 71 is connected to the housing 98 and the pole piece connection part 41, and in a more detailed example, it is connected to the housing extension part 942 and the axial extension part 144. The first bearing 71 in the second bearing arrangement structure is also arranged to be hit by cooling air that may flow through the outer air gap G1 or the inner air gap G2, for example. When a configuration is adopted where cooling air flows in the inner air gap G2 or the outer air gap G1 from the other side to one side in the axial direction, the first bearing 71 may not be sufficiently cooled for the reasons described for the first bearing arrangement structure. Therefore, the present disclosure adopts a configuration where cooling air flowing through the pole piece air passage 56 is guided to the first bearing 71. The details will be described below.

The pole piece connection part 41C (41) illustrated in FIG. 7 includes a ring part 141C (141) connected to an end portion of the pole piece 55 on one side in the axial direction, a radial extension part 142C (142) extending radially inward from the ring part 141C, and an axial extension part 144C (144) extending from the radial extension part 142C to one side in the axial direction and connected to the first bearing 71. The ring part 141C has a connection part air passage 421C (421) opening in the axial direction and communicating with the pole piece air passage 56.

The connection part air passage 421C illustrated in FIG. 7 has a first connection part air passage 423 extending in the axial direction and an inclined air passage 425 connected to the first connection part air passage 423. The inclined air passage 425 includes an air passage outlet 409 which constitutes the end of the connection part air passage 421 on one side in the axial direction. The inclined air passage 425 slopes such that the radial distance to the first bearing 71 decreases toward one side in the axial direction. In other words, the air passage outlet 409 opens to one side in the axial direction and inner side in the radial direction. The connection part air passage 421B may not have the first connection part air passage 423. In this case, the connection part air passage 421C may be composed of only the inclined air passage 425.

With the above configuration, cooling air discharged from the inclined air passage 425 is guided toward the first bearing 71. As a result, the first bearing 71 can be cooled more easily. Thus, it is possible to achieve the magnetic geared electrical machine 1 that can suppress the temperature rise of the first bearing 71 accommodated inside the housing 98.

The pole piece connection part 41D (41) illustrated in FIG. 8 differs from the pole piece connection part 41C in that it includes a ring part 141D (141) instead of the ring part 141C. The ring part 141D has a connection part air passage 421D (421) opening in the axial direction and communicating with the pole piece air passage 56 in the axial direction, and the connection part air passage 421D extends in the axial direction. The magnetic geared electrical machine 1 in this example is provided with a guide 35. The guide 35 is connected to an end portion 49 of the pole piece connection part 41D on one side in the axial direction. The guide 35 includes an inclined guide surface 36 that slopes such that the radial distance to the first bearing 71 decreases toward one side in the axial direction. The radial position where the guide 35 is connected to the end portion 49 of the pole piece connection part 41D may be outside the connection part air passage 421D (421) as illustrated in FIG. 8, or inside the connection part air passage 421D (421).

With the above configuration, cooling air discharged from the connection part air passage 421 is guided toward the first bearing 71 by the inclined guide surface 36. As a result, the first bearing 71 can be cooled more easily. Thus, it is possible to achieve the magnetic geared electrical machine 1 that can suppress the temperature rise of the first bearing 71 accommodated inside the housing 98.

There is no problem in applying at least one of the configurations described for the first bearing arrangement structure to the second bearing arrangement structure. For example, the configuration where the axial extension part 144 has the axial passage 240, the configuration where the passage inner wall surface 242 has at least one of the protrusion 245 or the recess 246, the configuration where the radial passage 249 is provided in the side wall 241 of the axial extension part 144, the configuration where the second bearing 72 is provided on the rotational shaft 80 and the axial extension part 144, the configuration where the rotational shaft 80 has the shaft internal passage 88, the configuration where the shaft inner wall surface 880 has at least one of the shaft inner wall protrusion 881 or the shaft inner wall recess 882, the configuration where the peripheral wall 181 of the rotational shaft 80 is opposed to the power transmission shaft 8 with the gap 13 therebetween, the configuration where the peripheral wall inner peripheral surface 182 of the peripheral wall 181 of the rotational shaft 80 has at least one of the groove 183 or the fin 184, the configuration where the axial extension part 144 is made of an anisotropic thermal conductive material, the configuration where the rotational shaft 80 is made of an anisotropic thermal conductive material, or any combination of these configurations may be applied to the second bearing arrangement structure. The technical advantages associated with its application have already been described above, and are not discussed in detail.

### <9. Conclusion>

The contents described in some embodiments described above would be understood as follows, for instance.
1) A magnetic geared electrical machine (1) according to at least one embodiment of the present disclosure includes: a stator (20); a pole piece rotor (30) including a pole piece (55) disposed radially inward of the stator (20) and a pole piece connection part (41) connected to an end portion of the pole piece (55) on one side in an axial direction; a magnet rotor (10) disposed radially inward of the pole piece (55); a housing (98) which accommodates the stator (20), the pole piece rotor (30), and the magnet rotor (10); a first bearing (71) connected to the housing (98) and the pole piece connection part (41); and a fan (60) for sending cooling air to the first bearing (71), the fan (60) being configured such that the cooling air flows from the other side to the one side in the axial direction in each of an outer air gap (G1) formed between the stator (20) and the pole piece (55) and an inner air gap (G2) formed between the pole piece (55) and the magnet rotor (10). At least a part of the first bearing (71) is located radially outward of an inner peripheral surface (155) of the pole piece (55) and radially inward of the stator (20).

When a configuration is adopted where cooling air flows in the inner air gap (G2) or the outer air gap (G1) from the other side to the one side in the axial direction, the cooling air that receives heat from at least one of the pole piece rotor (30), the stator (20), or the magnet rotor (10) cools the first bearing (71). Therefore, there is a risk that the cooling air may not sufficiently cool the first bearing (71), which has a relatively low heat resistance temperature. In this regard, with the above configuration 1), cooling air flowing through the outer air gap (G1) easily hits the first bearing (71) or the member (housing extension part 942) that is connected to the first bearing (71), which facilitates cooling of the first bearing (71). Thus, it is possible to achieve the magnetic geared electrical machine (1) that can suppress the temperature rise of a bearing (first bearing 71) accommodated inside the housing (98).

2) In some embodiments, in the magnetic geared electrical machine (1) as defined in the above 1), the first bearing (71) is located radially inward of the stator (20).

With the above configuration 2), the first bearing (71) can be separated in the radial direction from the stator (20), whose temperature tends to rise significantly due to heat generated, so that the cooling effect on the first bearing (71) can be improved. Furthermore, since the whole of the first bearing (71) is located radially inward of the stator (10), the stator (10) does not interfere with work in at least one of the assembly or disassembly processes of the magnetic geared electrical machine (1). Therefore, at least one of the assembly or disassembly processes of the magnetic geared electrical machine (1) can be simplified.

3) In some embodiments, in the magnetic geared electrical machine (1) as defined in the above 1) or 2), at least a part of the first bearing (71) is located radially outward of an outer peripheral surface (154) of the pole piece (55).

With the above configuration 3), since at least a part of the first bearing (71) is axially aligned with the outer air gap (G1), cooling air flowing through the outer air gap (G1) easily hits the first bearing (71), and the magnetic geared electrical machine (1) can improve the cooling effect on the first bearing (71).

4) In some embodiments, in the magnetic geared electrical machine (1) as defined in any of the above 1) to 3), a part of the first bearing (71) is located radially inward of an outer peripheral surface (11) of the magnet rotor (10).

With the above configuration 4), since a part of the first bearing (71) is axially aligned with the inner air gap (G2), the first bearing (71) is easily cooled by cooling air flowing through the inner air gap (G2). Therefore, the magnetic geared electrical machine (1) can improve the cooling effect on the first bearing (71).

5) A magnetic geared electrical machine (1) according to at least one embodiment of the present disclosure includes: a stator (20); a pole piece rotor (30) including a pole piece (55) disposed radially inward of the stator (20) and a pole piece connection part (41) connected to an end portion of the pole piece (55) on one side in an axial direction; a magnet rotor (10) disposed radially inward of the pole piece (55); a housing (98) which accommodates the stator (20), the pole piece rotor (30), and the magnet rotor (10); a first bearing (71) connected to the housing (98) and the pole piece connection part (41) and disposed radially inward of the pole piece (55); and a fan (60) for sending cooling air to the first bearing (71), the fan (60) being configured such that the cooling air flows from the other side to the one side in the axial direction in each of an outer air gap (G1) formed between the stator (20) and the pole piece (55) and an inner air gap (G2) formed between the pole piece (55) and the magnet rotor (10). The pole piece connection part (41) includes: a ring part (141) connected to the end portion of the pole piece (55); a radial extension part (142) extending radially inward from the ring part (141); and an axial extension part (144) extending from the radial extension part (142) to the one side in the axial direction and connected to the first bearing (71). The pole piece (55) has a pole piece air passage (56) which opens in the axial direction. The ring part (141) has a connection part air passage (421) which opens in the axial direction and communicates with the pole piece air passage (56) in the axial direction. The connection part air passage (421) has an inclined air passage (425) that slopes such that a radial distance to the first bearing (71) decreases toward the one side, the inclined air passage (425) including an air passage outlet (409) formed at an end portion of the ring part (141) on the one side.

With the above configuration 5), cooling air discharged from the inclined air passage (425) is guided toward the first bearing (71). As a result, the first bearing (71) can be cooled more easily. Thus, it is possible to achieve the magnetic geared electrical machine (1) that can suppress the temperature rise of a bearing (first bearing 71) accommodated inside the housing (98).

6) A magnetic geared electrical machine (1) according to at least one embodiment of the present disclosure includes: a stator (20); a pole piece rotor (30) including a pole piece (55) disposed radially inward of the stator (20) and a pole piece connection part (41) connected to an end portion of the pole piece (55) on one side in an axial direction; a magnet rotor (10) disposed radially inward of the pole piece (55); a housing (98) which accommodates the stator (20), the pole piece rotor (30), and the magnet rotor (10); a first bearing (71) connected to the housing (98) and the pole piece connection part (41) and disposed radially inward of the pole piece (55); and a fan (60) for sending cooling air to the first bearing (71), the fan (60) being configured such that the cooling air flows from the other side to the one side in the axial direction in each of an outer air gap (G1) formed between the stator (20) and the pole piece (55) and an inner air gap (G2) formed between the pole piece (55) and the magnet rotor (10). The pole piece connection part (41) includes: a ring part (141) connected to the end portion of the pole piece (55); a radial extension part (142) extending radially inward from the ring part (141); and an axial extension part (144) extending from the radial extension part (142) to the one side in the axial direction and connected to the first bearing (71). The pole piece (55) has a pole piece air passage (56) which opens in the axial direction. The ring part (141) has a connection part air passage (421) which opens in the axial direction and communicates with the pole piece air passage (56) in the axial direction. The magnetic geared electrical machine (1) further includes a guide (35) connected to an end portion (49) of the pole piece connection part (41) on the one side and including an inclined guide surface (36) that slopes such that a radial distance to the first bearing (71) decreases toward the one side.

With the above configuration 6), cooling air discharged from the connection part air passage (421) is guided toward the first bearing (71) by the inclined guide surface (36). As a result, the first bearing (71) can be cooled more easily. Thus, it is possible to achieve the magnetic geared electrical machine (1) that can suppress the temperature rise of a bearing (first bearing 71) accommodated inside the housing (98).

7) In some embodiments, in the magnetic geared electrical machine (1) as defined in any of the above 1) to 6), the pole piece connection part (41) further includes an axial extension part (144) extending in the axial direction and connected to the first bearing (71), and the axial extension part (144) has an axial passage (240) which is a hole opening in the axial direction.

With the above configuration 7), cooling air flowing through the axial passage (240) can cool the first bearing (71) through cooling of the axial extension part (144). Therefore, the cooling effect on the first bearing (71) can be improved.

8) In some embodiments, in the magnetic geared electrical machine (1) as defined in the above 7), the axial passage (240) has a passage inner wall surface (242) extending in the axial direction. The passage inner wall surface (242) has at least one of a protrusion (245) or a recess (246).

With the above configuration 8), since at least one of the protrusion (245) or the recess (246) is formed on the passage inner wall surface (242), the surface area of the passage inner wall surface (242) exposed to cooling air is increased. Therefore, the cooling effect on the first bearing (71) can be improved.

9) In some embodiments, in the magnetic geared electrical machine (1) as defined in the above 7) or 8), the axial extension part (144) has: a side wall (241) surrounding the axial passage (240); and a radial passage (249) which is a hole penetrating the side wall (241) in the radial direction on a side opposite the one side relative to the first bearing (71), the radial passage (249) communicating with the axial passage (240).

With the above configuration 9), cooling air can flow into the axial passage (240) via the radial passage (249). This facilitates the introduction of cooling air into the axial passage (240), thus improving the cooling effect on the first bearing (71).

10) In some embodiments, the magnetic geared electrical machine (1) as defined in any of the above 7) to 9) further includes: a rotational shaft (80) extending in the axial direction and supporting the magnet rotor (10); and a second bearing (72) connected to the rotational shaft (80) and the axial extension part (144) on the one side in the axial direction relative to the magnet rotor (10).

When a configuration is adopted where cooling air flows in the inner air gap (G2) or the outer air gap (G1) from the other side to the one side in the axial direction, the cooling air that receives heat from at least one of the pole piece rotor (30), the stator (20), or the magnet rotor (10) cools the second bearing (72). Therefore, there is a risk that the cooling air may not sufficiently cool the second bearing (72), which has a relatively low heat resistance temperature. In this regard, with the above configuration 10), cooling air flowing through the axial passage (240) of the axial extension part (144) can cool not only the first bearing (71) but also the second bearing (72). Thus, it is possible to achieve the magnetic geared electrical machine (1) that can suppress the temperature rise of a bearing (second bearing 72) accommodated inside the housing (98).

11) In some embodiments, in the magnetic geared electrical machine (1) as defined in the above 10), the rotational shaft (80) further has: a shaft outer peripheral surface (85); and a shaft internal passage (88) having a first opening (81) formed in the shaft outer peripheral surface (85) between the second bearing (72) and the magnet rotor (10) and a second opening (82) formed in the shaft outer peripheral surface (85) on a side opposite the first opening (81) with the second bearing (72) therebetween, the shaft internal passage (88) connecting the first opening (81) and the second opening (82) radially inward of the shaft outer peripheral surface (85).

With the above configuration 11), cooling air flowing through the shaft internal passage (88) can cool the second bearing (72) via the rotational shaft (80). Therefore, the cooling effect on the second bearing (72) can be further improved.

12) In some embodiments, in the magnetic geared electrical machine (1) as defined in the above 11), the shaft internal passage (88) has a shaft inner wall surface (880). The shaft inner wall surface (880) has at least one of a shaft inner wall protrusion (881) or a shaft inner wall recess (882).

With the above configuration 12), since at least one of the shaft inner wall protrusion (881) or the shaft inner wall recess (882) is formed on the shaft inner wall surface (880), the surface area of the shaft inner wall surface (880) exposed to cooling air flowing through the shaft internal passage (88) is increased. Therefore, the cooling effect on the second bearing (72) can be improved.

13) In some embodiments, in the magnetic geared electrical machine (1) as defined in any of the above 10) to 12), the rotational shaft (80) further has: a peripheral wall (181) extending in the axial direction and defining a receiving hole (188) for receiving a power transmission shaft (8) which rotates in conjunction with the pole piece rotor (30); and a peripheral wall through-passage (185) penetrating the peripheral wall (181). The peripheral wall (181) is configured to face the power transmission shaft (8) with a gap (13) therebetween.

With the above configuration 13), cooling air can reach the interior of the peripheral wall (181) via the peripheral wall through-passage (185). This improves the cooling effect on the rotational shaft (80) by cooling air, thus enabling cooling of the second bearing (72) through cooling of the rotational shaft (80). Therefore, the cooling effect on the second bearing (72) can be improved.

14) In some embodiments, in the magnetic geared electrical machine (1) as defined in the above 13), the peripheral wall (181) further has: a peripheral wall inner peripheral surface (182) configured to face the power transmission shaft (8) with a gap (13) therebetween; and at least one of a groove (183) disposed on the peripheral wall inner peripheral surface (182) or a fin (184) disposed on the peripheral wall inner peripheral surface (182).

The above configuration 14) facilitates cooling of the peripheral wall (181) by cooling air, thus improving the cooling effect on the rotational shaft (80) and improving the cooling effect on the second bearing (72).

15) In some embodiments, in the magnetic geared electrical machine (1) as defined in any of the above 1) to 14), the pole piece connection part (41) further includes an axial extension part (144) extending in the axial direction and connected to the first bearing (71). The axial extension part (144) is made of an anisotropic thermal conductive material whose thermal conductivity in the axial direction is higher than that in the radial direction.

The above configuration 15) accelerates the release of heat accumulated in the axial extension part (144) in the axial direction, thus improving the cooling effect on the axial extension part (144) and improving the cooling effect on the first bearing (71) connected to the axial extension part (144).

16) In some embodiments, in the magnetic geared electrical machine (1) as defined in any of the above 1) to 15), the pole piece connection part (41) further includes an axial extension part (144) extending in the axial direction and connected to the first bearing (71). The magnetic geared electrical machine (1) further includes: a rotational shaft (80) extending in the axial direction and supporting the magnet rotor (10); and a second bearing (72) connected to the rotational shaft (80) and the axial extension part (144) on the one side in the axial direction relative to the magnet rotor (10). The rotational shaft (80) is made of an anisotropic thermal conductive material whose thermal conductivity in the axial direction is higher than that in the radial direction.

The above configuration 16) accelerates the release of heat accumulated in the rotational shaft (80) in the axial direction, thus improving the cooling effect on the rotational shaft (80) and improving the cooling effect on the second bearing (72) connected to the rotational shaft (80).

### Reference Signs List

- 1: Magnetic geared electrical machine
- 8: Power transmission shaft
- 10: Magnet rotor
- 11: Outer peripheral surface
- 13: Gap
- 20: Stator
- 30: Pole piece rotor
- 35: Guide
- 36: Inclined guide surface
- 41: Pole piece connection part
- 49: End portion
- 55: Pole piece
- 56: Pole piece air passage
- 60: Fan
- 71: First bearing
- 72: Second bearing
- 80: Rotational shaft
- 81: First opening
- 82: Second opening
- 85: Shaft outer peripheral surface
- 88: Shaft internal passage
- 98: Housing
- 141: Ring part
- 142: Radial extension part
- 144: Axial extension part
- 154: Outer peripheral surface
- 155: Inner peripheral surface
- 181: Peripheral wall
- 182: Peripheral wall inner peripheral surface
- 183: Groove
- 184: Fin
- 185: Peripheral wall through-passage
- 188: Receiving hole
- 240: Axial passage
- 241: Side wall
- 242: Passage inner wall surface
- 245: Protrusion
- 246: Recess
- 249: Radial passage
- 409: Air passage outlet
- 421: Connection part air passage
- 425: Inclined air passage
- 880: Shaft inner wall surface
- 881: Shaft inner wall protrusion
- 882: Shaft inner wall recess
- G1: Outer air gap
- G2: Inner air gap

## Claims

1. A magnetic geared electrical machine, comprising:
a stator;
a pole piece rotor including a pole piece disposed radially inward of the stator and a pole piece connection part connected to an end portion of the pole piece on one side in an axial direction;
a magnet rotor disposed radially inward of the pole piece;
a housing which accommodates the stator, the pole piece rotor, and the magnet rotor;
a first bearing connected to the housing and the pole piece connection part; and
a fan for sending cooling air to the first bearing, the fan being configured such that the cooling air flows from the other side to the one side in the axial direction in each of an outer air gap formed between the stator and the pole piece and an inner air gap formed between the pole piece and the magnet rotor,
wherein at least a part of the first bearing is located radially outward of an inner peripheral surface of the pole piece and radially inward of the stator.

2. The magnetic geared electrical machine according to claim 1,
wherein the first bearing is located radially inward of the stator.

3. The magnetic geared electrical machine according to claim 1 or 2,
wherein at least a part of the first bearing is located radially outward of an outer peripheral surface of the pole piece.

4. The magnetic geared electrical machine according to claim 1 or 2,
wherein a part of the first bearing is located radially inward of an outer peripheral surface of the magnet rotor.

5. A magnetic geared electrical machine, comprising:
a stator;
a pole piece rotor including a pole piece disposed radially inward of the stator and a pole piece connection part connected to an end portion of the pole piece on one side in an axial direction;
a magnet rotor disposed radially inward of the pole piece;
a housing which accommodates the stator, the pole piece rotor, and the magnet rotor;
a first bearing connected to the housing and the pole piece connection part and disposed radially inward of the pole piece; and
a fan for sending cooling air to the first bearing, the fan being configured such that the cooling air flows from the other side to the one side in the axial direction in each of an outer air gap formed between the stator and the pole piece and an inner air gap formed between the pole piece and the magnet rotor,
wherein the pole piece connection part includes:
a ring part connected to the end portion of the pole piece;
a radial extension part extending radially inward from the ring part; and
an axial extension part extending from the radial extension part to the one side in the axial direction and connected to the first bearing,
wherein the pole piece has a pole piece air passage which opens in the axial direction,
wherein the ring part has a connection part air passage which opens in the axial direction and communicates with the pole piece air passage in the axial direction, and
wherein the connection part air passage has an inclined air passage that slopes such that a radial distance to the first bearing decreases toward the one side, the inclined air passage including an air passage outlet formed at an end portion of the ring part on the one side.

6. A magnetic geared electrical machine, comprising:
a stator;
a pole piece rotor including a pole piece disposed radially inward of the stator and a pole piece connection part connected to an end portion of the pole piece on one side in an axial direction;
a magnet rotor disposed radially inward of the pole piece;
a housing which accommodates the stator, the pole piece rotor, and the magnet rotor;
a first bearing connected to the housing and the pole piece connection part and disposed radially inward of the pole piece; and
a fan for sending cooling air to the first bearing, the fan being configured such that the cooling air flows from the other side to the one side in the axial direction in each of an outer air gap formed between the stator and the pole piece and an inner air gap formed between the pole piece and the magnet rotor,
wherein the pole piece connection part includes:
a ring part connected to the end portion of the pole piece;
a radial extension part extending radially inward from the ring part; and
an axial extension part extending from the radial extension part to the one side in the axial direction and connected to the first bearing,
wherein the pole piece has a pole piece air passage which opens in the axial direction,
wherein the ring part has a connection part air passage which opens in the axial direction and communicates with the pole piece air passage in the axial direction, and
wherein the magnetic geared electrical machine further comprises a guide connected to an end portion of the pole piece connection part on the one side and including an inclined guide surface that slopes such that a radial distance to the first bearing decreases toward the one side.

7. The magnetic geared electrical machine according to any one of claims 1, 5, and 6,
wherein the pole piece connection part further includes an axial extension part extending in the axial direction and connected to the first bearing, and
wherein the axial extension part has an axial passage which is a hole opening in the axial direction.

8. The magnetic geared electrical machine according to claim 7,
wherein the axial passage has a passage inner wall surface extending in the axial direction, and
wherein the passage inner wall surface has at least one of a protrusion or a recess.

9. The magnetic geared electrical machine according to claim 7,
wherein the axial extension part has:
a side wall surrounding the axial passage; and
a radial passage which is a hole penetrating the side wall in the radial direction on a side opposite the one side relative to the first bearing, the radial passage communicating with the axial passage.

10. The magnetic geared electrical machine according to claim 7, further comprising:
a rotational shaft extending in the axial direction and supporting the magnet rotor; and
a second bearing connected to the rotational shaft and the axial extension part on the one side in the axial direction relative to the magnet rotor.

11. The magnetic geared electrical machine according to claim 10,
wherein the rotational shaft further has:
a shaft outer peripheral surface; and
a shaft internal passage having a first opening formed in the shaft outer peripheral surface between the second bearing and the magnet rotor and a second opening formed in the shaft outer peripheral surface on a side opposite the first opening with the second bearing therebetween, the shaft internal passage connecting the first opening and the second opening radially inward of the shaft outer peripheral surface.

12. The magnetic geared electrical machine according to claim 11,
wherein the shaft internal passage has a shaft inner wall surface, and
wherein the shaft inner wall surface has at least one of a shaft inner wall protrusion or a shaft inner wall recess.

13. The magnetic geared electrical machine according to claim 10,
wherein the rotational shaft further has:
a peripheral wall extending in the axial direction and defining a receiving hole for receiving a power transmission shaft which rotates in conjunction with the pole piece rotor; and
a peripheral wall through-passage penetrating the peripheral wall, and
wherein the peripheral wall is configured to face the power transmission shaft with a gap therebetween.

14. The magnetic geared electrical machine according to claim 13,
wherein the peripheral wall further has:
a peripheral wall inner peripheral surface configured to face the power transmission shaft with a gap therebetween; and
at least one of a groove disposed on the peripheral wall inner peripheral surface or a fin disposed on the peripheral wall inner peripheral surface.

15. The magnetic geared electrical machine according to any one of claims 1, 5, and 6,
wherein the pole piece connection part further includes an axial extension part extending in the axial direction and connected to the first bearing, and
wherein the axial extension part is made of an anisotropic thermal conductive material whose thermal conductivity in the axial direction is higher than that in the radial direction.

16. The magnetic geared electrical machine according to any one of claims 1, 5, and 6,
wherein the pole piece connection part further includes an axial extension part extending in the axial direction and connected to the first bearing,
wherein the magnetic geared electrical machine further comprises:
a rotational shaft extending in the axial direction and supporting the magnet rotor; and
a second bearing connected to the rotational shaft and the axial extension part on the one side in the axial direction relative to the magnet rotor, and
wherein the rotational shaft is made of an anisotropic thermal conductive material whose thermal conductivity in the axial direction is higher than that in the radial direction.
